# EUROPÄISCHE PATENTSCHRIFT

(11) **EP 1 381 501 B1**
(45) Veröffentlichungstag und Bekanntmachung des Hinweises auf die Patenterteilung: **03.11.2004**
(21) Anmeldenummer: 02764016.8
(22) Anmeldetag: 17.04.2002
(51) Int. Cl.: B29C 45/50, B29C 45/40

(54) **SPRITZGIESSMASCHINE MIT ELEKTROMOTORISCHEM SPINDELANTRIEB UND FEDERARBEITSSPEICHER ZUR UNTERSTÜTZUNG DES ELEKTROMOTORS**
INJECTION MOULDING MACHINE COMPRISING AN ELECTROMOTIVE SPINDLE DRIVE AND A SPRING WORKING MEMORY FOR SUPPORTING THE ELECTRIC MOTOR
MACHINE A MOULER PAR INJECTION A COMMANDE ELECTROMOTRICE A BROCHE, ET MEMOIRE DE TRAVAIL ELASTIQUE ASSISTANT LE MOTEUR ELECTRIQUE

(30) Priorität: 19.04.2001 AT 632012001
(43) Veröffentlichungstag der Anmeldung: 21.01.2004
(73) Patentinhaber: Demag Ergotech GmbH, 90571 Schwaig (DE); L&T-Demag Plastics Machinery Private Limited, Chennai-600 089 (IN)
(72) Erfinder: ICKINGER, Georg, Michael, A-8010 Graz (AT); HARISH, Kittappa, Gowda, Mt. Poonamallee Road (IN); SAJU, Mangalasseril, 5, Plot 17, Teachers Colony (IN); SIVAKUMAR, Shanmuaham, 4A TL Raghupathi Str. (IN); KUMAR, Mathrubootmam, 1 Cross Street (IN); VIVEK, Anand, Sukumaran, 19, Purananure Street (IN)
(74) Vertreter: Wilhelm, Ludwig, Dipl.-Phys.
(86) Internationale Anmeldenummer: PCT/EP2002/004230
(87) Internationale Veröffentlichungsnummer: WO 2002/085599

(56) Entgegenhaltungen:
- PATENT ABSTRACTS OF JAPAN vol. 016, no. 010 (M-1199), 13. Januar 1992 (1992-01-13) & JP 03 231823 A (SANKYO SEIMITSU KANAGATA KK;OTHERS: 01), 15. Oktober 1991 (1991-10-15)
- PATENT ABSTRACTS OF JAPAN vol. 010, no. 234 (M-507), 14. August 1986 (1986-08-14) & JP 61 068219 A (FANUC LTD), 8. April 1986 (1986-04-08)
- PATENT ABSTRACTS OF JAPAN vol. 1997, no. 12, 25. Dezember 1997 (1997-12-25) & JP 09 220739 A (TOSHIBA FA SYST ENG KK;TOSHIBA CORP), 26. August 1997 (1997-08-26)

## Beschreibung

Die Erfindung bezieht sich auf eine Spritzgießmaschine mit mindestens einem Hubantrieb in Form eines elektromotorischen Spindelantriebs und einem diesem zugeordneten, in der einen Bewegungsphase des Spindelantriebs durch diesen beladenen und in einer anderen Bewegungsphase unter Kraftverstärkung des Elektromotors sich entladenden Arbeitsspeicher.

Aus der WO 97/34757 ist als Hubantrieb für eine Spritzgießmaschine ein Spindelantrieb einschließlich eines Elektromotors und zur Entlastung des Elektromotors in der Vorschubphase ein zu diesem parallel wirkender Arbeitsspeicher in Form einer Druckfederanordnung bekannt, welche beim Spindelrückhub zunehmend beladen wird und beim Spindelvorschub eine entsprechend der Federkennlinie kontinuierlich abnehmende Verstärkungskraft erzeugt.

Hubantriebe zur zyklischen Betätigen des Auswerfers mit relativ hoher Arbeitsfrequenz oder solche, mit denen große Massen hin- und herbewegt werden müssen, also etwa der Linearantrieb für die Plastifiziereinheit, müssen hingegen an den jeweiligen Hubumkehrpunkten hohe Verzögerungs- und Beschleunigungskräfte aufbringen, was mit den bekannten Hubantrieben nur mit Hilfe leistungsstarker Elektromotoren und einem dementsprechend hohen Energieverbrauch zu erreichen ist.

Aufgabe der Erfindung ist es, bei einer Spritzgießmaschine der eingangs genannten Art den Spindelantrieb so auszubilden, dass sich mit einem geringen Energieverbrauch des Elektromotors hohe Beschleunigungs- und Verzögerungskräfte an den Hubumkehrpunkten erzeugen lassen.

Die Lösung dieser Aufgabe besteht erfindungsgemäß darin, dass die Spritzgießmaschine der eingangs genannten Art als Arbeitsspeicher einen den Spindelantrieb gegensinnig beaufschlagenden, im Abstand zu den Endpositionen des Spindelantriebs kraftausgeglichenen Doppelspeicher enthält.

Aufgrund der Kombination des beanspruchten Doppelspeichers mit einem elektromotorischen Antrieb, der anstelle einer zwangsweisen eine magnetische Ankoppelung an die mechanischen Antriebselemente des Spindelantriebs besitzt, arbeitet der Spindelantrieb erfindungsgemäß nach Art eines freischwingenden Massesystems, welches - zumindest theoretisch - völlig ohne Energiebedarf linear zwischen den Hubendpositionen hin- und herpendelt, so dass der Elektromotor von massenbedingten Trägheitskräften weitestgehend entlastet wird und - etwa in dem bevorzugten Anwendungsfall einer pulsierenden Auswerferbetätigung - im Wesentlichen nur noch die Stoßenergie zum Entformen des oder der Spritzgussteile liefern muss.

Im Hinblick auf eine einfache Bauweise des Doppelspeichers besteht dieser vorzugsweise aus zwei entgegengesetzt wirkenden Druckfederanordnungen in Form von Tellerfederpaketen.

Ein weiterer wesentlicher Aspekt der Erfindung liegt darin, dass der Spindelantrieb entgegen der Speicherkraft in zumindest einer Endposition, etwa in der Rückhubposition des Auswerfers oder auch an beiden Hubumkehrpunkten der Plastifiziereinheit, selektiv angehalten werden kann, ohne dass die erforderlichen Haltekräfte vom Elektromotor aufgebracht werden müssen. Zu diesem Zweck ist in baulich einfacher Weise eine parallel zum Arbeitsspeicher zwischen einem der mechanischen Antriebselemente des Spindelantriebs und einem Gehäuseteil wirkende, veränderlich steuerbare Kraftkoppelung vorgesehen, welche zweckmäßigerweise aus einer impulsgesteuert freischaltbaren Arretierung besteht. Im Falle eines Hubantriebs für die Plastifiziereinheit ist die Arretierung in den Endpositionen der Plastifiziereinheit selbsttätig sperrend ausgebildet. Wird der Spindelantrieb zur pulsierenden Betätigung des Auswerfers eingesetzt, so empfiehlt es sich, den Kraftausgleich des Arbeitsspeichers nahe an den Schwingungsnullpunkt des Auswerfers zu legen und die Erregerfrequenz des Elektromotors auf die Eigenfrequenz des aus Doppelspeicher und bewegter Masse bestehenden Schwingungssystems abzustimmen.

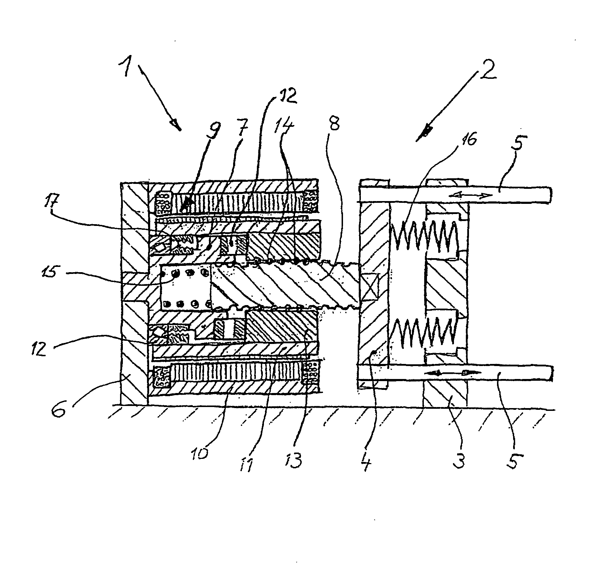

Die Erfindung wird nunmehr anhand eines Ausführungsbeispiels in Verbindung mit der Zeichnung näher erläutert, die in ihrer einzigen Figur einen schematischen Längsschnitt einer Spritzgießmaschine im Bereich des Auswerfers mit zugehörigem Hubantrieb zeigt.

Der in der Zeichnung dargestellte Hubantrieb 1 dient zur pulsierenden Betätigung eines Auswerfers 2, welcher aus einer feststehenden Führungsplatte 3 und einer Auswerferplatte 4 mit an dieser befestigten, linear beweglich an der Führungsplatte 3 gelagerten Auswerferstößeln 5 besteht.

Der Hubantrieb 1 ist als elektromotorischer Spindelantrieb ausgebildet und enthält ein feststehendes Gehäuse 6 mit einem zentralen Aufnahmeteil 7 für die in diesem linear verschieblich angeordnete, am vorderen Ende mit der Auswerferpfatte 4 fest verbundene und über diese drehfest gesicherte Spindelstange 8, sowie einen elektromotorischen Antrieb 9 mit einem elektrisch erregten, am Gehäuse 6 befestigten Stator 10 und einem zugeordneten Rotor 11, welcher über Lagerstellen 12 drehbar, aber in Axialrichtung unverschieblich am Aufnahmeteil 7 abgestützt ist. Mit dem Rotor 11 ist die Spindelmutter 13 fest verbunden, die mit der Spindelstange 8 über Wälzkugeln 14 zusammenwirkt.

Dem Spindelantrieb 1 ist ein mechanischer Doppelspeicher zugeordnet, welcher aus einer Schraubendruckfeder 15, die die Spindelstange 8 in Vorschubrichtung beaufschlagt, und gegensinnig zur Schraubendruckfeder 15 wirkenden Tellerfederpaketen 16 besteht, welche zwischen der Führungsplatte 3 und der Auswerferplatte 4 angeordnet sind.

Komplettiert wird der Spindelantrieb 1 durch eine zwischen dem Rotor 11 und dem Aufnahmeteil 7 wirksame, impulsgesteuert freischaltbare Arretierung 17 in Form einer Bremse, Kupplung oder Einwegsperre, durch welche die Spindelstange 8 in der Rückzugposition entgegen der Speicherkraft der Druckfeder 15 hubfest verriegelbar ist.

Zum Entformen eines Spritzgussteils wird die Arretierung 17 gelöst, so dass die Spindelstange 8 gemeinsam mit der Auswerferplatte 4 und den Auswerferstößeln 5 linear hin- und herschwingt, wobei die Kennlinien der Federn 15, 16 so bemessen sind, dass die Federkräfte in der gezeigten Schwingungsnulllage der Auswerferplatte 4 annähernd entgegengesetzt gleich groß sind. Dabei wird der Elektromotor 9 in Übereinstimmung mit der Eigenschwingungsfrequenz des Feder-Massesystems derart erregt, dass er die zum Entformen des Spritzgussteils erforderlichen Stoßimpulse und die unvermeidlichen Reibungsverluste des Schwingungssystems abdeckt. Nach dem Entformen des Spritzgussteils wird der Antrieb 1 durch die Arretierung 17 erneut in der Rückzugposition verriegelt.

Wahlweise lässt sich der Spindelantrieb 1 in anäloger Bauweise auch zur Hubsteuerung der Plastifiziereinheit (nicht gezeigt) einer Spritzgießmaschine verwenden. In diesem Falle kann die Plastifiziereinheit durch die Arretierung 17 an beiden Hubumkehrpunkten, also sowohl in der Vorschublage während des Einspritzvorgangs als auch in der Rückzugposition der Plastifiziereinheit bis zum Ende des Befüllvorgangs, hubfest verriegelt werden. Wegen der erheblich größeren Masse der Plastifiziereinheit müssen natürlich auch die entgegengesetzt wirkenden Federanordnungen 15, 16 entsprechend steifer ausgelegt werden.

## Patentansprüche

1. Spritzgießmaschine mit mindestens einem Hubantrieb in Form eines elektromotorischen Spindelantriebs und einem diesem zugeordneten, in der einen Bewegungsphase des Spindelantriebs durch diesen beladenen und in einer anderen Bewegungsphase sich unter Kraftverstärkung des Elektromotors entladenden Arbeitspeicher, **dadurch gekennzeichnet, dass**
der Arbeitsspeicher als den Spindelantrieb (1) gegensinnig beaufschlagender, im Abstand zu den Endpositionen des Spindelantriebs kraftausgeglichener Doppelspeicher (15, 16) ausgebildet ist

2. Spritzgießmaschine nach Anspruch 1, **dadurch gekennzeichnet, dass**
der Doppelspeicher aus zwei entgegengesetzt wirkenden Druckfederanordnungen (15, 16) besteht.

3. Spritzgießmaschine nach Anspruch 2, **dadurch gekennzeichnet, dass**
mindestens eine Druckfederanordnung als Tellerfederpaket (16) ausgebildet ist.

4. Spritzgießmaschine nach einem der vorhergehenden Ansprüche, **gekennzeichnet durch**
eine parallel zum Doppelspeicher (15, 16) wirkende, zwischen einem der Antriebselemente (11, 13) und einem Gehäuseteil (7) des Spindelantriebs (1) wirkende, veränderlich steuerbare Kraftkoppelung (17).

5. Spritzgießmaschine nach Anspruch 4, **dadurch gekennzeichnet, dass**
die Kraftkoppelung aus einer impulsgesteuert freischaltbaren Arretierung (17) des Antriebselements (11, 13) besteht.

6. Spritzgießmaschine nach Anspruch 5, **dadurch gekennzeichnet, dass**
der Spindelantrieb (1) zur Hubsteuerung der Plastifiziereinheit vorgesehen und die Arretierung (17) in den Endpositionen der Plastifiziereinheit selbsttätig sperrend ausgebildet ist.

7. Spritzgießmaschine nach einem der Ansprüche 1 bis 5, **dadurch gekennzeichnet, dass**
der Spindelantrieb (1) zur pulsierenden Betätigung des Auswerfers (2) vorgesehen und der Doppelspeicher (15, 16) annähernd am Schwingungsnullpunkt des Auswerfers kraftausgeglichen ist.

8. Spritzgießmaschine nach Anspruch 7, **dadurch gekennzeichnet, dass**
der Spindelantrieb (1) in der Rückzugposition des Auswerfers (2) selektiv arretierbar ist.

9. Spritzgießmaschine nach Anspruch 7 oder 8, **dadurch gekennzeichnet, dass**
die Erregerfrequenz des Elektromotors (9) auf die Eigenfrequenz des aus dem Doppelspeicher (15, 16) und der bewegten Masse (4, 5, 8, 11, 13) bestehenden Schwingungssystems abgestimmt ist.

## Claims

1. Injection moulding machine comprising at least one lifting drive in the form of a spindle drive with an electric motor, and a working memory which is associated with this spindle drive and is charged thereby in one movement phase of the spindle drive and is discharged in another movement phase with boosting of the electric motor, **characterised in that** the working memory is formed as a force-balanced dual memory (15, 16) loading the spindle drive (1) in opposite directions and spaced from the end positions of the spindle drive.

2. Injection moulding machine according to claim 1, **characterised in that** the dual memory consists of two compression spring arrangements (15, 16) acting in opposite directions.

3. Injection moulding machine according to claim 2, **characterised in that** at least one compression spring arrangement is designed as a disc spring assembly (16).

4. Injection moulding machine according to any one of the preceding claims, **characterised by** a force coupling (17) with variable control, which acts parallel to the dual memory (15, 16) and acts between one of the drive elements (11, 13) and a housing part (7) of the spindle drive (1).

5. Injection moulding machine according to claim 4, **characterised in that** the force coupling consists of an impulse-controlled, releasable locking device (17) of the drive element (11, 13).

6. Injection moulding machine according to claim 5, **characterised in that** the spindle drive (1) is provided for the lift control of the plasticizing unit and the locking device (17) is formed to lock automatically in the end positions of the plasticizing unit.

7. Injection moulding machine according to any one of claims 1 to 5, **characterised in that** the spindle drive (1) is provided for pulsating actuation of the ejector (2) and the dual memory (15, 16) is force-balanced virtually at the centre point of oscillation of the ejector.

8. Injection moulding machine according to claim 7, **characterised in that** the spindle drive (1) can be selectively locked in the retracted position of the ejector (2).

9. Injection moulding machine according to claim 7 or 8, **characterised in that** the excitation frequency of the electric motor (9) is matched to the inherent frequency of the oscillation system consisting of the dual memory (15, 16) and the moved mass (4, 5, 8, 11, 13).

## Revendications

1. Presse d'injection avec au moins une commande de levage sous forme d'une commande de broche électromotorisée et d'une mémoire de travail affectée à celle-ci, dans une phase de mouvement de la commande de broche chargée par celle-ci et, dans une autre phase de mouvement, déchargée sous l'amplification de puissance du moteur électrique, **caractérisée en ce que** la mémoire de travail est formée comme une mémoire double (15, 16) alimentant en sens inverse la commande de broche (1) et équilibrant les forces à distance des positions finales de la commande de broche.

2. Presse d'injection selon la revendication 1, **caractérisée en ce que** la mémoire double est composée de deux dispositions de ressort à pression agissant à l'opposé.

3. Presse d'injection selon la revendication 2, **caractérisée en ce qu'**au moins une disposition de ressort à pression est formée en tant que paquet de ressort à disques (16).

4. Presse d'injection selon l'une quelconque des revendications précédentes, **caractérisée par** un couplage de force (17) réglable de façon variable, parallèle à la mémoire double (15, 16), agissant entre un des éléments de commande (11, 13) et une pièce de boîtier (7) de la commande de broche (1).

5. Presse d'injection selon la revendication 4, **caractérisée en ce que** le couplage de force se compose d'un dispositif d'arrêt (17) pouvant être déconnecté piloté par impulsions de l'élément de commande (11, 13).

6. Presse d'injection selon la revendication 5, **caractérisée en ce que** la commande de broche (1) est prévue pour la commande de levage de l'unité plastifiée et le dispositif d'arrêt (17) est formé pour être bloqué automatiquement dans les positions finales de l'unité plastifiée.

7. Presse d'injection selon l'une quelconque des revendications 1 à 5, **caractérisée en ce que** la commande de broche (1) est prévue pour agir par impulsions sur l'éjecteur (2) et **en ce que** la mémoire double (15, 16) équilibre les forces approximativement au niveau du point de vibration nulle de l'éjecteur.

8. Presse d'injection selon la revendication 7, **caractérisée en ce que** la commande de broche (1) peut être arrêtée de façon sélective dans la position de retour de l'éjecteur (2).

9. Presse d'injection selon la revendication 7 ou 8, **caractérisée en ce que** la fréquence d'excitation du moteur électrique (9) correspond à la fréquence propre du système de vibration composé de la mémoire double (15, 16) et de la masse déplacée (4, 5, 8, 11, 13).
